# EUROPEAN PATENT APPLICATION

(11) **EP 3 062 218 A1**
(43) Date of publication of application: **31.08.2016**
(21) Application number: 15275045.1
(22) Date of filing: 25.02.2015
(51) Int. Cl.: G06F 9/44, G06F 3/14, G06T 19/00

(54) **Interactive information system**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A mixed reality system comprising a headset (100) for placing over a user's eyes, in use, the headset including a screen (102), the system further comprising a processor (104) configured to generate a three dimensional virtual environment, and an image capture device (106) for capturing visible image data representative of the real world environment in the vicinity of a user, the processor (104) being configured to blend said visible image data into said three dimensional virtual environment to create and display on said screen (102) a continuously updated mixed reality environment representative of a user's filed of view, the processor being further configured to extract, from an optical image captured in respect of the real world environment in the vicinity of said user, an optical label representative of a digital location at which data or electronic media is stored and can be accessed, the system further comprising an optical label reader for decoding said extracted optical label to determine said digital location and accessing said data or electronic media stored therein, the processor being further configured to blend image data representative of said accessed data or electronic media into said mixed reality environment displayed on said screen (102).

## Description

This invention relates generally to an interactive information system, and method for providing same, and more particularly, but not necessarily exclusively, to a mixed reality system configured to enable a number of users to work together in a collaborative environment that requires sharing and exchange of traditional paper-based information sources.

There are many circumstances, in various environments, wherein two or more people may be required to work in a collaborative manner. This may require the utilisation and sharing of physical objects such as books, print-outs, hard copies of documents, etc. during discussions. However, such resources lack the ability to provide data in different formats, such as animations, video and other media enhancements, which would otherwise serve to increase a user's ability to assimilate the information provided.

It would therefore be desirable to provide a system and method whereby both physical objects and information, as well as electronic data and media, can be shared seamlessly amongst users to facilitate a fully interactive and collaborative information sharing environment.

In accordance with an aspect of the present invention, there is provided a mixed reality system comprising headset for placing over a user's eyes, in use, the headset including a screen, the system further comprising a processor configured to generate a three dimensional virtual environment, and an image capture device for capturing visible image data representative of the real world environment in the vicinity of a user, the processor being configured to blend said visible image data into said three dimensional virtual environment to create and display on said screen a continuously updated mixed reality environment representative of a user's filed of view, the processor being further configured to extract, from an optical image captured in respect of the real world environment in the vicinity of said user, an optical label representative of a digital location at which data or electronic media is stored and can be accessed, the system further comprising an optical label reader for decoding said extracted optical label to determine said digital location and accessing said data or electronic media stored therein, the processor being further configured to blend image data representative of said accessed data or electronic media into said mixed reality environment displayed on said screen.

The processor may be configured to extract, from said visible image data, an optical label that is visible to the naked eye.

The system may, alternatively or in addition, comprise a spectral camera for capturing multispectral image data representative of the real world environment in the vicinity of a user, wherein said processor may be configured to extract, from said multispectral image data, an optical label that is detectable at one or more optical wavelengths outside the visible wavelength band.

The system may be configured to scan captured image data representative of the real world environment in the vicinity of a user so as to identify one or more optical labels present therein, and display, on said screen, data representative of identified optical labels. In this case, the system may further comprise a selection function actuatable by a user so as to select an optical label, from said identified optical labels, to be decoded and the data or electronic media stored in the digital location associated therewith accessed.

The system may, alternatively or in addition, further comprise a selection function, actuatable by a user, to select an optical label, from within said mixed reality environment displayed on said screen, to be decoded and the data or electronic media stored in the digital location associated therewith accessed.

The above-mentioned selection function may be actuatable by a predefined bodily movement of a user. In this case, the processor may be configured to identify and extract a predefined user bodily movement from said visible image data captured in respect of the real world environment in the vicinity of said user, identify therefrom a required selection action, and generate a control signal to effect said selection action.

In an exemplary embodiment of the present invention, the selection function may be actuatable by a predefined hand gesture made by a user.

The system may comprise a pair of spatially separated image capture devices for capturing respective images of the real world environment in the vicinity of the user, said processor being configured to define a depth map using respective image frame pairs to produce three-dimensional image data. In this case, the image capture devices may be mounted on said headset so as to be substantially aligned with a user's eyes, in use.

Another aspect of the present invention extends to a method of displaying data or electronic media, the method comprising:
- applying an optical label to a physical object, said optical label being representative of a digital location at which data or electronic media is stored and can be accessed;
- providing a mixed reality system comprising a headset for placing over a user's eyes, in use, the headset including a screen, the system further comprising a processor configured to generate a three dimensional virtual environment, and an image capture device for capturing visible image data representative of the real world environment in the vicinity of a user, the processor being configured to blend said visible image data into said three dimensional virtual environment to create and display on said screen a continuously updated mixed reality environment representative of a user's filed of view;
- configuring said processor to extract, from an optical image captured in respect of the real world environment in the vicinity of said user, said optical label;
- configuring an optical label reader to decode said extracted optical label to determine said digital location and access said data or electronic media stored therein; and
- configuring the processor to blend image data representative of said accessed data or electronic media into said mixed reality environment displayed on said screen.

These and other aspects of the present invention will be apparent from the following specific description in which embodiments of the present invention are described, by way of examples only, and with reference to the accompanying drawings, in which:
Figure 1 is a front perspective view of a headset for use in a control apparatus according to an exemplary embodiment of the present invention;
Figure 2 is a schematic block diagram of a control apparatus according to an exemplary embodiment of the present invention; and
Figure 3 is a schematic diagram illustrating a system according to an exemplary embodiment of the present invention, in use.

Virtual reality systems are known, comprising a headset which, when placed over a user's eyes, creates and displays a three-dimensional virtual environment in which a user feels immersed and with which a user can interact in a manner dependent on the application. For example, in some prior art systems, the virtual environment created may comprise a game zone, within which a user can play a game. However, in an environment where the user needs to be able to see where they are going in order to function appropriately within their physical environment, such systems are unsuitable.

More recently, augmented and mixed reality systems have been developed, wherein an image of a real world object can be captured, rendered and placed within a 3D virtual reality environment, such that it can be viewed and manipulated within that environment in the same way as virtual objects therein.

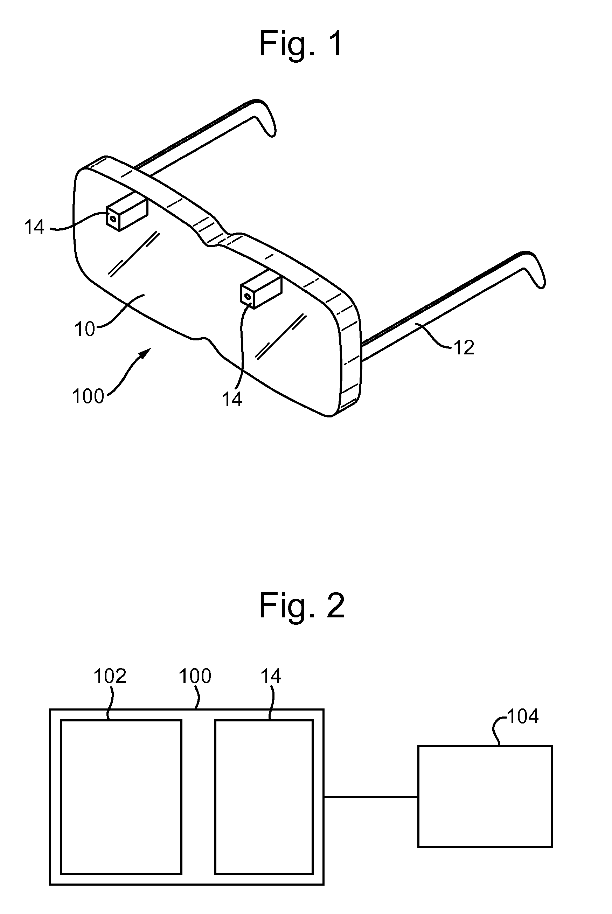

Referring to Figure 1 of the drawings, a system according to an exemplary embodiment of the present invention may comprise a headset 100 comprising a visor 10 having a pair of arms 12 hingedly attached at opposing sides thereof in order to allow the visor to be secured onto a user's head, over their eyes, in use, by placing the curved ends of the arms 12 over and behind the user's ears, in a manner similar to conventional spectacles. It will be appreciated that, whilst the headset is illustrated herein in the form of a visor, it may alternatively comprise a helmet for placing over a user's head, or even a pair of contact lenses or the like, for placing within the user's eyes, and the present invention is not intended to be in any way limited in this regard. Also provided on the headset, is a pair of image capture devices 14 for capturing images of the environment, such image capture devices being mounted roughly aligned with a user's eyes in use.

The system of the present invention further comprises a processor which is communicably connected in some way to a screen which is provided inside the visor 10. Such communicable connection may be a hard wired electrical connection, in which case the processor and associated circuitry will also be mounted on the headset. However, in an alternative exemplary embodiment, the processor may be configured to wirelessly communicate with the visor, for example, by means of Bluetooth or similar wireless communication protocol, in which case, the processor need not be mounted on the headset but can instead be located remotely from the headset, with the relative allowable distance between them being dictated and limited only by the wireless communication protocol being employed. For example, the processor could be mounted on or formed integrally with the user's clothing, or instead located remotely from the user, either as a stand-alone unit or as an integral part of a larger control unit, for example.

Referring to Figure 2 of the drawings, a system according to an exemplary embodiment of the invention comprises, generally, a headset 100, incorporating a screen 102, a processor 104, and a pair of external digital image capture devices (only one shown) 14. The user's headset 100 includes two image capture devices, as stated previously, which may be used to capture respective images of the real world environment in the vicinity of the user, and data representative thereof can be blended to produce a stereoscopic depth map which enables the processor to determine depth within the captured images without any additional infrastructure being required.

The processor 104 is configured to generate and display on the screen 102, a three dimensional virtual environment, and all or selected portions of the 3D images captured by the image capture devices 14 can be blended into the virtual environment being displayed on the screen. The general concept of real time image blending for augmented and mixed reality is known, and several techniques have been proposed. The present invention is not intended to be in any way limited in this regard. However, for completeness, one exemplary method for image blending will be briefly described. Thus, once the image data for an item to be blended into the virtual environment has been generated, a threshold function may be applied in order to extract that image data from any background images. Its relative location and orientation may also be extracted and preserved by means of marker data. Next, the image and marker data is converted to a binary image, possibly by means of adaptive thresholding (although other methods are known). The marker data and binary image are then transformed into a set of coordinates which match the location within the virtual environment in which they will be blended. Such blending is usually performed using black and white image data. Thus, if necessary, colour data sampled from the source image may be backward warped, using homography, to each pixel in the resultant virtual scene. All of these computational steps require minimal processing capacity and time and can, therefore, be performed quickly and in real time. Thus, if the selected object is moving, for example, the user's own body, the corresponding image data within the virtual environment can be updated in real time.

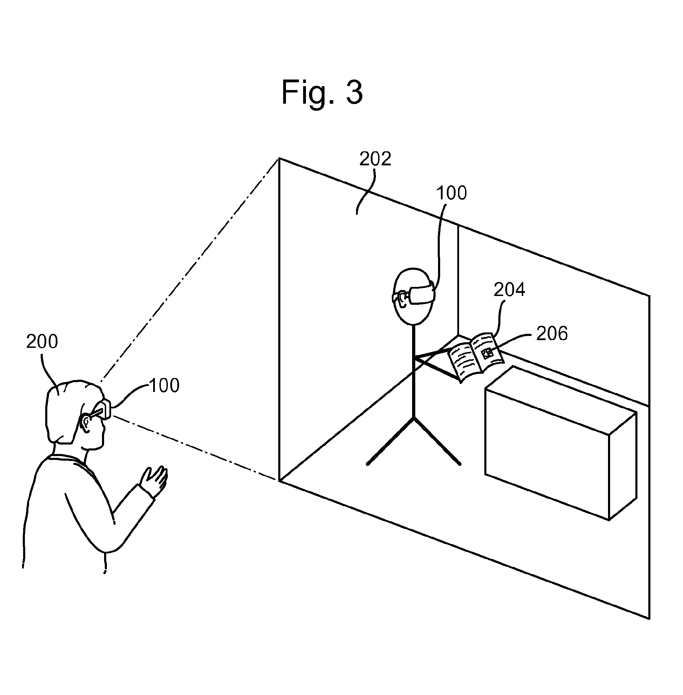

Referring to Figure 3 of the drawings, the user 200 is thus provided with a three dimensional mixed reality view 202 which is representative of the surroundings within their field of view, including any people and objects with which they may be required to interact. During a collaborative process, for example, a paper document or book 204 may be required to be shared amongst a number of users. An optical label 206 is provided within the pages of the book 204. The optical label may take any one of a number of different forms, for example, it may comprise a barcode or QR code, but the present invention is not necessarily intended to be limited in this regard.

The label 206 contains, or is representative of, a digital location in which digital data or media is stored which is relevant to the resource to which it has been applied. Such digital data and media may take any known form, including document files, image files, media files having active content and feedback options, adverts, e-commerce portals or even games. It is important to note that, in accordance with aspects of the present invention, the printed document is still perfectly usable, in a conventional manner, without a mixed reality system. The addition of a mixed reality headset serves to enhance the functionality of the document, by enabling the label to be identified and the associated content accessed.

When the optical label 206 is within the user's filed of view, image data representative thereof will be captured by the image capture devices 14 on the user's headset. Image recognition means within the processor may be configured to continuously scan images captured by the image capture devices to identify and extract optical labels in the vicinity of the user. These could then be provided as options from which the user can select in order to access any required data or media. Alternatively, the user themselves may identify, from the mixed reality environment displayed on their screen, an optical label which they wish to utilise, and actuate an image extraction process in order to extract the required optical label from the captured image data. In either case, selection may be effected in one of a number of different ways. The image capture devices 14 on the user's headset also capture image data representative of parts of the user's body, including their arms, hands and fingers. Thus, selection could, in some exemplary embodiments of the invention, be effected by means of predefined hand gestures in respect of the optical label to be utilised.

As explained above, the image capturing module provided in the system described above can be used to capture video images of the user's hands, such that hand gestures provide a convenient method of selecting optical labels within the 3D mixed reality environment. One relatively simple method of automated hand gesture recognition and control using captured digital video images involves the use of a database of images of predefined hand gestures and the command to which they relate. Thus, an auto threshold function is first performed on the image to extract the hand from the background. The wrist is then removed from the hand shape, using a so-called "blob" image superposed over the palm of the hand, to separate out the individual parts of the hand so that the edge of the blob defines the border of the image. The parts outside of the border (i.e. the wrist) are then removed from the image, following which shape recognition software can be used to extract and match the shape of the hand to the predefined hand gesture, and call the associated command accordingly.

It will be appreciated by a person skilled in the art that other methods of selecting optical labels within the 3D mixed reality environment may alternatively or additionally be employed, including other bodily movements, such as a user's head movement. In this case, gaze detection means and a movement sensor may, for example, be used to determine a movement of a user's head in the direction of a selected optical label. In any event, it will be appreciated that the present invention is not necessarily intended to be limited in this regard.

It will be further appreciated that the optical label may not necessarily be visible to the naked eye. Media only detectable using wavelengths other than visible wavelengths may be used to apply the optical labels to the physical objects. In this case, a multi-spectral or hyperspectral camera may be provided within the system to detect such optical labels within multi-spectral images captured thereby.

Once an optical label is selected, the processor is configured to automatically open the hyperlink represented thereby in order to access the location in which the relevant digital data or media is stored and, once accessed and retrieved, blend the data or media into the mixed reality environment displayed on the user's screen. The present invention is not intended to be limited in relation to the natures and types of digital data and media that can be accessed within the system via the above-mentioned optical labels and, indeed, the invention is not intended to be limited to simply enabling a user to access and view such data or media. Systems according to at least some exemplary embodiments of the present invention, may be configured to enable the user to interact fully with the data or media once displayed within their mixed reality environment on the screen, depending of course on the nature and type of the data or media in question.

It will be appreciated by a person skilled in the art, from the foregoing description, that modifications and variations can be made to the described embodiments without departing from the scope of the invention as claimed.

## Claims

1. A mixed reality system comprising a headset for placing over a user's eyes, in use, the headset including a screen, the system further comprising a processor configured to generate a three dimensional virtual environment, and an image capture device for capturing visible image data representative of the real world environment in the vicinity of a user, the processor being configured to blend said visible image data into said three dimensional virtual environment to create and display on said screen a continuously updated mixed reality environment representative of a user's filed of view, the processor being further configured to extract, from an optical image captured in respect of the real world environment in the vicinity of said user, an optical label representative of a digital location at which data or electronic media is stored and can be accessed, the system further comprising an optical label reader for decoding said extracted optical label to determine said digital location and accessing said data or electronic media stored therein, the processor being further configured to blend image data representative of said accessed data or electronic media into said mixed reality environment displayed on said screen.

2. A system according to claim 1, wherein said processor is configured to extract, from said visible image data, an optical label that is visible to the naked eye.

3. A system according to claim 1, comprising a spectral camera for capturing multispectral image data representative of the real world environment in the vicinity of a user, wherein said processor is configured to extract, from said multispectral image data, an optical label that is detectable at one or more optical wavelengths outside the visible wavelength band.

4. A system according to any of the preceding claims, configured to scan captured image data representative of the real world environment in the vicinity of a user so as to identify one or more optical labels present therein, and display, on said screen, data representative of identified optical labels.

5. A system according to claim 4, further comprising a selection function actuatable by a user so as to select an optical label, from said identified optical labels, to be decoded and the data or electronic media stored in the digital location associated therewith accessed.

6. A system according to any of the preceding claims, further comprising a selection function, actuatable by a user, to select an optical label, from within said mixed reality environment displayed on said screen, to be decoded and the data or electronic media stored in the digital location associated therewith accessed.

7. A system according to claim 5 or claim 6, wherein said selection function is actuatable by a predefined bodily movement of a user.

8. A system according to claim 7, wherein said processor is configured to identify and extract a predefined user bodily movement from said visible image data captured in respect of the real world environment in the vicinity of said user, identify therefrom a required selection action, and generate a control signal to effect said selection action.

9. A system according to claim 7 or claim 8, wherein said selection function is actuatable by a predefined hand gesture made by a user.

10. A system according to any of the preceding claims, comprising a pair of spatially separated image capture devices for capturing respective images of the real world environment in the vicinity of the user, said processor being configured to define a depth map using respective image frame pairs to produce three-dimensional image data.

11. A system according to claim 10, wherein said image capture devices are mounted on said headset so as to be substantially aligned with a user's eyes, in use.

12. A method of displaying data or electronic media, the method comprising:
applying an optical label to a physical object, said optical label being representative of a digital location at which data or electronic media is stored and can be accessed;
providing a mixed reality system comprising a headset for placing over a user's eyes, in use, the headset including a screen, the system further comprising a processor configured to generate a three dimensional virtual environment, and an image capture device for capturing visible image data representative of the real world environment in the vicinity of a user, the processor being configured to blend said visible image data into said three dimensional virtual environment to create and display on said screen a continuously updated mixed reality environment representative of a user's filed of view;
configuring said processor to extract, from an optical image captured in respect of the real world environment in the vicinity of said user, said optical label;
configuring an optical label reader to decode said extracted optical label to determine said digital location and access said data or electronic media stored therein; and
configuring the processor to blend image data representative of said accessed data or electronic media into said mixed reality environment displayed on said screen.
